# EUROPEAN PATENT SPECIFICATION

(11) **EP 1 766 256 B1**
(45) Date of publication and mention of the grant of the patent: **15.09.2010**
(21) Application number: 05757699.3
(22) Date of filing: 06.06.2005
(51) Int. Cl.: F16D 55/36, B60L 7/00

(54) **ELECTRIC BRAKE FOR AIRCRAFT**
ELEKTRISCHE BREMSE FÜR LUFTFAHRZEUG
FREIN ELECTRIQUE POUR AERONEF

(30) Priority: 04.06.2004 US 577226 P
(43) Date of publication of application: 28.03.2007
(73) Proprietor: Goodrich Corporation, Charlotte, North Carolina 28217-4578 (US)
(72) Inventor: HIMES, Timothy M., c/o Goodrich Corporation, Troy, Ohio 45373-3872 (US); REED, Eric J., c/o Goodrich Corporation, Troy, Ohio 45373-3872 (US); RUNNER, Bud W., c/o Goodrich Corporation, Troy, Ohio 45373-3872 (US); BOTKIN, Tricia L., c/o Goodrich Corporation, Troy, Ohio 45373-3872 (US); MCDOUGAL, Alan V., c/o Goodrich Corporation, Troy, Ohio 45373-3872 (US); ANDERSON, Steve W., c/o Goodrich Corporation, Troy, Ohio 45373-3872 (US)
(74) Representative: von Kreisler Selting Werner
(86) International application number: PCT/US2005/019853
(87) International publication number: WO 2006/025905

(56) References cited:
- WO-A-01/20188
- US-A- 4 408 682
- US-A- 5 105 682
- US-A1- 2003 178 264

## Description

### Field of the Invention

The invention herein described relates generally to an electric brake actuator assembly particularly useful in aircraft.

### Background of the Invention

Known in the prior art are aircraft wheel and brake assemblies including a non-rotatable wheel support, a wheel mounted to the wheel support for rotation, and a brake disk stack having front and rear axial ends and alternating rotor and stator disks mounted with respect to the wheel support and wheel for relative axial movement. Each rotor disk is coupled to the wheel for rotation therewith and each stator disk is coupled to the wheel support against rotation. A back plate is located at the rear end of the disk stack and a brake head is located at the front end. The brake head houses a plurality of actuator rams that extend to compress the brake disk stack against the back plate. Torque is taken out by the stator disks through a static torque tube or the like.

Electrically actuated aircraft brakes of various configurations are known, as exemplified by U.S.-A-4,381,049, US-A-4,432,440, US-A-4,542,809 and US-A-4,567,967. The brake assemblies shown in these patents include electric motors which respond to an electrical control signal to effect rotation of a ring gear member which interacts through a plurality of balls to drive a linearly movable ram member into contacting engagement with a brake disk stack to effect compression thereof and braking of a wheel.

In U.S.-A-4,596,316, another configuration of an electrically actuated brake uses a roller screw drive wherein a ring gear member interacts through a plurality of roller screws to drive a ram member into engagement with the brake pressure plate to effect compression of the brake disk stack for braking action. A plurality of electric motors and their associated pinions drive a ring gear into rotation and the plurality of roller screws effect linear axial movement of the ram member.

In U.S.-A-4,865,162, a further electrically actuated aircraft brake employs a roller screw drive mechanism driven by an electric torque motor through a gear drive associated with either the screw or the nut of the roller screw drive mechanism. Rotation of the gear drive by the torque motor moves the other one of the screw or nut into axial engagement with a brake disk stack to compress the stack for braking. A plurality of the roller screw drive mechanisms and respective gear drives and torque motors are mounted in a balanced arrangement about the axis of the wheel to apply and release a brake pressure force on the brake disk stack in response to an electrical control signal to the torque motors.

The repair or maintenance of these previously known brakes including torque motor driven rams heretofore has required significant disassembly of the brake. The complex integrated nature of prior art designs normally require substantial teardown of the assembly for maintenance, repair and/or overhaul of the assembly even if minor repair or only replacement of a single faulty component is required. Associated with extensive teardown is a lengthy reassembly and retest procedure to verify flight worthiness. Also, a highly integrated design and assembly with complex machining and assembly procedures is costly to process and manufacture. Distribution and parts stocking of individual components of such an assembly is similarly complex and inefficient as cam be appreciated by those knowledgeable in this area. Consequently, an aircraft, for example a commercial passenger aircraft, would most likely have to be taken out of scheduled service until a faulty actuator could be serviced. This results in lost revenue for the airline, scheduling adjustments, considerable inconvenience for customers, etc.

U.S.-A-6,095,293 discloses an electric brake and method characterized by the use actuator modules each of which can be easily and quickly replaced as a unit. This enables quick and easy replacement of the actuator modules without requiring disassembly of the overall brake and wheel assembly. Also, it is conceivable that a malfunctioning actuator module could be replaced on an aircraft and tested with a minimum of equipment preferably quickly enough to allow the aircraft to remain in scheduled service and/or with a minimum of downtime. In addition, periodic maintenance of the brake can be done quicker and more efficiently by replacing the actuator modules with reconditioned and/or new actuator modules.

The electric brake described in U.S.-A- 6,095,293 comprises a brake disk stack, a brake head, and at least one actuator module mounted to the brake head. The actuator module includes a module housing, a reciprocating ram and a motive device, i.e, an electric motor, operatively connected to the reciprocating ram for selectively moving the reciprocating ram into and out of forceful engagement with the brake disk stack for applying and releasing braking force. The actuator module is removable as a unit from one side of the brake head and most preferably from the side of the brake head opposite the brake disk stack. The ram includes a ram nut, and the electric motor is drivingly connected to a lead screw, e.g. a ball screw, in threaded engagement with the ram nut whereupon rotation of the lead screw effects linear movement of the nut toward and away from the brake disk stack. The module housing includes a guideway for guiding the ram nut, and the guideway and ram nut respectively have polygonal cross-sections defined by plural outer side surfaces which rotationally interfere with one another to restrain rotation of the ram nut relative to the housing.

WO-A-01/20188 also discloses another electromechanical actuator module including a housing, a linearly movable ram, a screw for linearly moving the ram, a nut mounted for rotation in the housing and operatively engaged with the screw such that rotation of the nut effects linear movement of the screw for urging the ram into forceful engagement with the brake disk stack, an electric motor for rotating the nut, and an anti-rotation device for preventing rotation of the screw relative to the housing when the nut is rotated to effect linear movement of the screw. This arrangement provides for greater stroke than prior art actuators without sacrificing durability and performance. To prevent foreign material from entering the housing at the screw, a bellows is used to provide a seal with respect to the housing and screw.

US-A-2003/178264 discloses an actuator for an electrical brake according to the preamble of claim 1.

US-A-5 601 160 describes a hydraulic brake wherein hydraulic fluid pressure in cavity acts on a piston to urge the piston against the stack of brake members. This known hydraulic brake comprises a sleeve which is part of a brake return mechanism that pushes the piston away from the stack of brake members and when hydraulic pressure is released from the cavity.

### Summary of the Invention

The present invention provides a number of improvements over known electric brakes. The several aspects of the invention are below summarized.

The invention provides an actuator as defined in claim 1. The dependent claims relate to individual embodiments of the invention.

The features of the invention are hereinafter fully described and particularly pointed out in the claims, the following description and the annexed drawings setting forth in detail one or more illustrative embodiments of the invention, such being indicative, however, of but one or a few of the various ways in which the principles of the invention may be employed.

### Brief Description of the Drawings

Fig. 1 is perspective rendering of an electric brake according to the invention.
Fig. 2 is a perspective rendering of a brake mounting plate used in the electric brake of Fig. 1.
Fig. 3 is a perspective view of an actuator module used in the electric brake of Fig. 1.
Figs. 4A-4D are sequence views showing removal of an actuator module from the brake mounting plate.
Fig. 5 is a perspective view, partly broken away in section, of the actuator module.
Fig. 6 is a partial cross-sectional view of a ram section of the actuator module.

### Detailed Description of the Invention

Because the invention was conceived and developed for use in an aircraft braking system, it will be herein described chiefly in this context. However, the principles of the invention in their broader aspects can be adapted to other types of braking systems, such as in train brake systems.

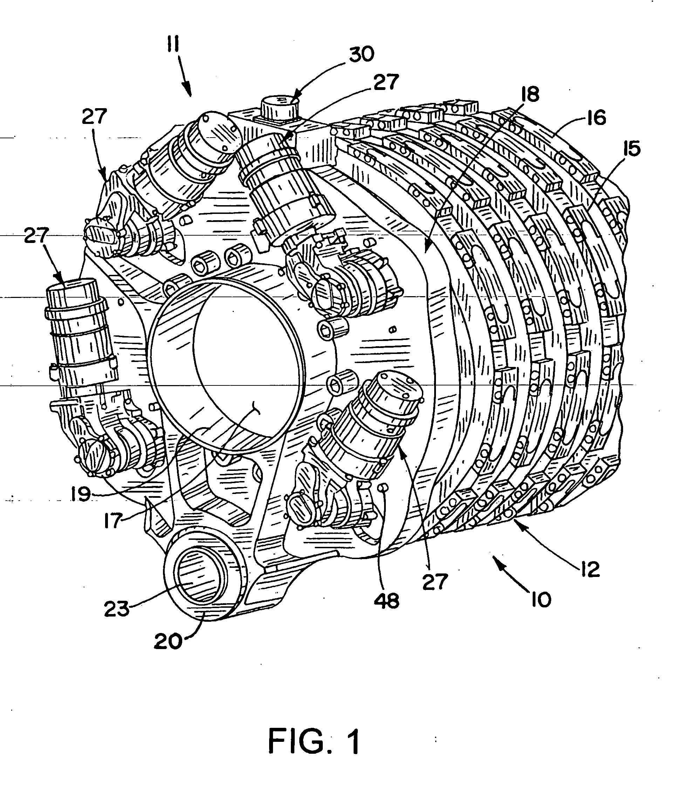

Referring now in detail to the drawings and initially to Fig. 1, an electric brake according to the present invention is generally indicated at 10. The brake 10 generally comprises a brake actuator assembly 11 and a heat sink in the form of a brake disk stack 12. The brake disk stack 12 can be of a conventional or other design including stationary brake elements and rotary brake elements that are interleaved and surround a torque tube or equivalent (not shown). The stationary and rotary brake elements usually are in the form of stator disks 15 and rotor disks 16. The stator disks 15 typically are splined to a torque tube 17 and the rotor disks 16 are splined to a wheel (not shown) interiorly of the wheel's rim. As is conventional, the splined connection may be effected by a plurality of spline or drive keys that are spaced around the circumference of the rim/torque tube to permit axial movement of the rotor/stator disks while being held to the wheel/torque tube against relative rotation.

The wheel (not shown) typically is supported for rotation on an axle (not shown) by axially spaced apart bearings (not shown). The axle thus forms a wheel mount and typically is attached to an aircraft landing gear strut or truck (not shown). For further details, reference may be had to U.S.-B-6,662,907.

The brake actuator assembly 11 includes a brake head 18 that can also be referred to as a brake housing or, in the present case, more particularly as a brake mounting plate. The brake mounting plate has a central opening 19 for mounting of the brake mounting plate on the landing gear axle or other wheel support. For some applications the brake mounting plate can be formed integrally with or fixedly secured (as by splines, bolts, etc.) to the axle or other wheel support for direct transfer of braking torque to the axle or other wheel support. In the illustrated embodiment, the brake mounting plate is supported on the axle for limited rotational movement, and the brake mounting plate is provided with a torque take-out arm 20. The torque take-out arm 20 extends radially and functions as a torque transfer interface between the brake actuator assembly and the landing gear axle/strut/truck structure. More particularly, the torque take-out arm 20 has an eye 23 that provides for connection to a brake rod that in turn is connected to the landing gear axie/strut/truck structure, as in a conventional manner, to provide for transfer of torque from the torque take-out arm to the landing gear axle/strut/truck structure when braking force is being applied to the disk brake stack 12 by the brake actuator assembly 11.

The disk stack 12 typically is located between a back pressure member (not shown) and the brake mounting plate 18. The back pressure member can be formed by a radial flange at the end of the torque tube opposite the brake mounting plate, which radial flange engages the last brake disk at the outboard end of the disk stack typically through the use of a plurality of circumferentially spaced apart pucks. For further details, reference may be had to U.S.-B-6,662,907.

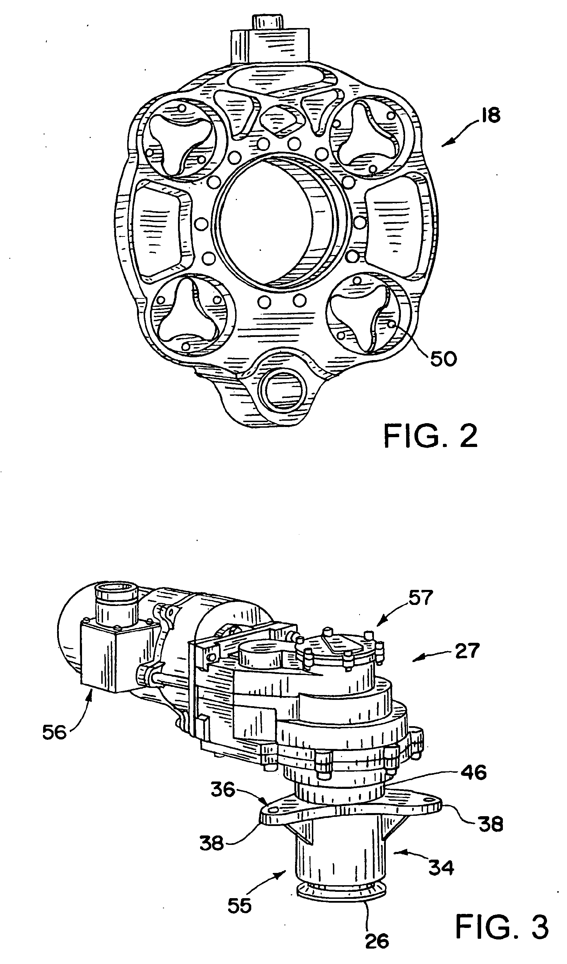

Pressure is applied to the other or inboard end of the disk stack 12 by the ram 26 (Fig. 3) of one or more actuator modules 27 that are mounted to the brake mounting plate 18. The actuator modules 27 preferably are mounted in a circular arrangement around the center axis of the brake mounting plate 18, preferably with the actuator rams 26 generally circumferentially equally spaced apart and/or with the rams arranged in diametrically opposed pairs. The actuator modules 27 can be connected by any suitable means such as cables to a single interface connector 30 to which a mating connector of a control cable (not shown) can be detachably connected for connecting the brake 10 to a brake controller (not shown) located elsewhere. The brake mounting plate serves as the platform for mounting the actuator modules and for reacting actuation and torque loads from the brake to an aircraft brake rod or other landing gear structure.

Preferably, the actuator modules 27 are identical and interchangeable, and a representative one of the actuator modules is shown in Fig. 3. Each actuator module has a housing 34 that has a radial mounting flange 36 for mounting to the brake mounting plate 18. The mounting flange 36 has a non-circular peripheral shape for providing a bayonet-like connection to the brake mounting plate. In the illustrated embodiment the mounting flange has one or more, and preferably three, radially extending arms or lobes 38. The three lobes have essentially the same shape and are circumferentially equally spaced apart, thereby giving the mounting flange an overall triangular shape.

The mounting flange 36 is shaped to allow insertion into a respective aperture 42 in the brake mounting plate 18. In the embodiment shown in Figure 2, each aperture 42 has a shape corresponding to the shape of the respective mounting flange, i.e., a multi-lobe triangular shape. It will be appreciated, however, that the illustrated shape is exemplary and the flange and aperture can be otherwise shaped.

The mounting flange 36 is also located adjacent a rotation neck portion 46 of the actuator module housing 34. The rotation neck portion has a length at least equal the thickness of the brake mounting plate 18 in the region thereof bounding the respective aperture 42. This allows the mounting flange to be inserted through the aperture and positioned on the outboard side of the brake mounting plate. The rotation neck portion will then be disposed within the aperture whereupon the actuator module can be rotated relative to the brake mounting plate. Such rotation will cause the mounting flange to be rotated to a position where it can engage the outboard side of the brake mounting plate and be secured against rotation by one or more fastening devices. In the illustrated embodiment, the fastening devices are bolts 48 that are threaded into holes 50 in the brake mounting plate 18, there being three bolts and holes for each actuator. As shown in Fig. 2, the brake mounting plate can be provided with recesses on its outboard side for accommodating the mounting flanges of the actuator housings such that the flanges do not project beyond the outboardmost surface of the brake mounting plate. As used herein, the outboard side of the brake mounting plate is the side nearest the brake disk stack.

As will be appreciated, braking load acting axially on each actuator module will be passed from the actuator module to the brake mounting plate without passing through the removable bolts 48 or other fastening device used to attach the actuator module to the brake mounting plate. Accordingly, one or more smaller and lighter fasteners can be used to effect attachment.

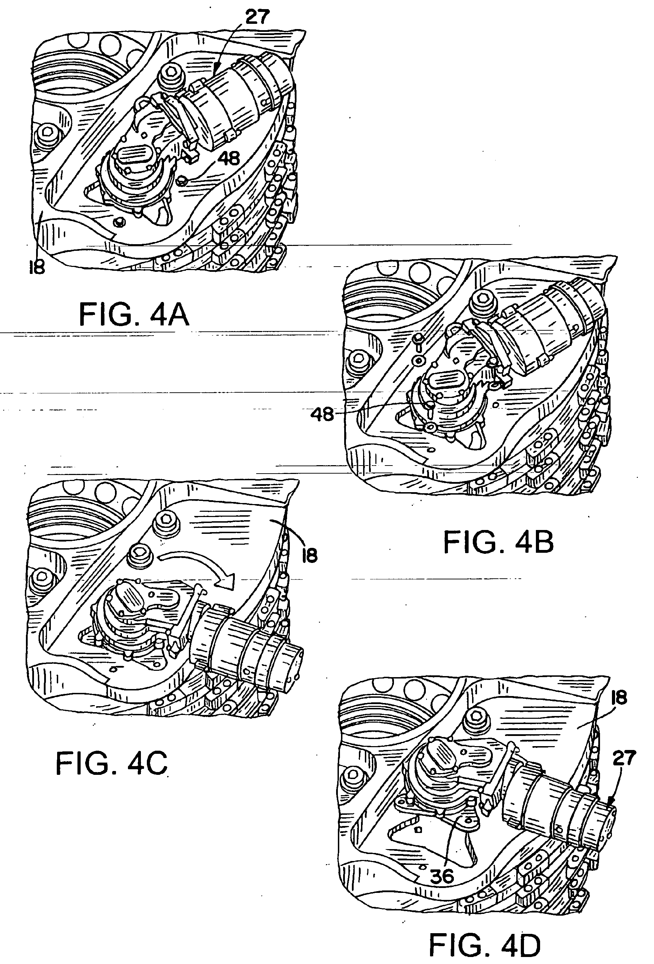

The foregoing arrangement also enables quick and easy swapping in and out of the actuator modules which preferably are line replaceable units while the brake is installed on the landing gear. Figs. 4A-4D illustrate removal of one of the actuator modules. In Fig. 4A, the actuator module is shown attached to the brake mounting plate in its normal operating position. In such position, the actuator module is generally located with a cylindrical envelope defined by the brake mounting plate. In Fig. 4B, the fasteners 48 have been removed to free the actuator module for rotation. In Fig. 4C, the actuator module is rotated outwardly to align the lobes of the mounting flange with the lobes of the aperture. In the illustrated embodiment, the actuator module is rotated 60 degrees. Once the lobes have been aligned, the actuator module can be moved away from the brake mounting plate as shown in Fig. 4D, with the mounting flange passing freely through the aperture. Installation is facilitated in a similar manner, except with steps in reverse order.

As shown in Fig. 3, the housing 34 of each actuator module 27 can be formed from several parts, and these parts can be associated with respective parts or sections of the actuator module. Generally, the actuator module has a ram drive section 55, a motor section 56 and a transmission section 57 connecting the ram drive section to the motor section. These sections can be removable with respect to one another, as might be desired to facilitate assembly and/or refurbishing the actuator module.

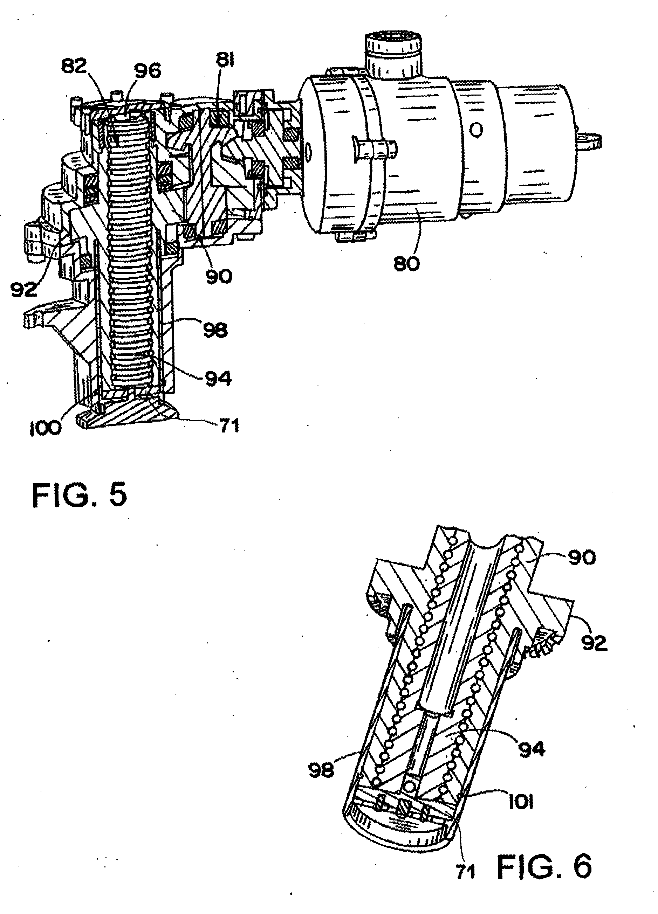

Referring now to Figs. 5 and 6, the illustrated representative actuator module 27 preferably includes an electric motor 80, a multi-stage reduction gear train 81, and a ball screw assembly 82. The motor 80, gearing 81 and ball screw assembly 82 are all carried in the module housing 34 and are removable as a single unit. Suitable bearings are provided for the various rotating components. An electrical connector 84 is provided on the housing for interfacing the motor with control circuitry.

The ball screw assembly 82 includes a ball nut 90 having a gear 92 in mesh with the output end of gearing 81. The ball screw assembly further includes a ball screw 94 that moves linearly upon rotation of the ball nut, an anti-rotation guide member 96 extending into the hollow interior of the ball screw, and a ram sleeve 98 that is telescoped over an axially outer portion of the ball nut. The ball screw and ball nut have respective spiral grooves/threads and associated balls for converting rotary motion to linear motion. Also, other rotary to linear motion conversion devices may by employed, if desired, with the linear moving member coinciding with the ball screw and functioning at its outboard end as the actuator ram. In the illustrated ball screw assembly, the interior bore of the screw and the anti-rotation guide have corresponding non-circular, e.g. polygonal, cross-sections which rotationally interfere with one another to restrain rotation of the screw relative to the housing.

The ball screw assembly translates the rotary motion from the gear train to the linear motion at the actuator output. Mechanical stops can be provided to limit the stroke of the translating screw, and a stop can be used as an absolute position indicator for calibrating the actuator stroke position.

The translating ball screw functions as the actuator ram and contacts the carbon brake disc stack through an insulator. The screw can be made of Inconel for thermal considerations. By simply changing the ball screw assembly the stroke length can easily be modified to allow the actuator to operate on many different aircraft brake assemblies with different stroke lengths.

The ram sleeve 98, which can be attached to the end of the ball screw 94, provides a sealing enclosure and can also function as an insulating interface with the brake disk stack. A dynamic seal/scraper 100 is used to seal the ram sleeve to the housing to prevent fluid from entering the actuator, and an inner seal/scraper 101 can be provided to seal between the screw 94 and the ram nut 90. The sleeve 98 telescopically slides on a cylindrical end portion of the ram nut 90 with a sliding fit in the housing. The sleeve 98 has a length sufficient to cover the length of the screw 94 that will project from the housing at full extension, while still remaining coextensive with the ram nut 90.

The outer end of the sleeve 98 is closed and can be configured to provide a convenient means to attach an insulating pad 71 to the end of the ram, which pad 71 provides the interface to the brake disk pressure plate and inhibits heat transfer into the actuator module.

As will be appreciated, rotation of the motor 80 in one direction will effect extension of the screw/ram for engaging and squeezing the brake disk stack, whereas rotation in the opposite direction will effect retraction of the ram, as for releasing braking force. In any given position of the ram, the gear train can be locked by the bi-stable holding brake if the gearing or motor is so-equipped. This is desirable, for example, to retain the ram in an extended position applying braking force to the brake disk stack when the plane is parked, thereby to keep the brake engaged to prevent movement of the aircraft. Although other types of braking devices can be used to maintain the actuators in a brake-engaged condition, preferably the holding brake is a bi-stable device that will latch and hold in either on or off positions, even when no power is being applied to the brake. However, when pulsed the device can be switched between its on and off positions.

## Claims

1. An actuator for an electric brake, comprising
- a housing (34), and
- a linearly movable ram (26),
**characterized by**
- a screw (94) for linearly moving the ram (26),
- a nut (90) mounted for rotation in the housing (34) and operatively engaged with the screw (94) such that rotation of the nut (90) effects linear movement of the screw (94) for urging the ram (26) into forceful engagement with a brake disk stack (12), and
- an electric motor (80) for rotating the nut (90), and
- a sleeve (98) telescoped over the nut (90) and movable with the screw (94), for preventing foreign material from entering the actuator.

2. An actuator according to claim 1 , wherein the sleeve (98) is attached to an end of the screw (94).

3. An actuator according to claim 1 or claim 2, wherein a dynamic seal (100) is used to seal the sleeve (98) to the housing (34) to prevent foreign material from entering the actuator.

4. An actuator according to claim 3, wherein an inner seal (101) is provided to seal between the screw (94) and the nut (90).

5. An actuator according to any preceding claim, wherein the sleeve (98) telescopically slides on a cylindrical end portion of the nut (90) with a sliding fit in the housing (34).

6. An actuator according to any preceding claim, wherein the sleeve (98) has a length sufficient to cover the length of the screw (94) that will project from the housing (34) at full extension, while still remaining coextensive with the nut (90).

7. An actuator according to any preceding claim, wherein the outer end of the sleeve (98) is closed and is configured to provide for attachment of an insulating pad (71 ) to the end of the ram (26), which pad (71) inhibits heat transfer into the actuator module.

8. An actuator according to any preceding claim, wherein the screw (94) is a ball screw and the nut (90) is a ball nut of a ball screw assembly (82).

9. An electric brake assembly, comprising a brake disk stack (12) having a center axis, and at least one actuator (27) according to any preceding claim for applying braking pressure to the brake disk stack.

10. An electric brake assembly according to claim 9, wherein a plurality of the actuators (27) are circumferentially arranged around the center axis.

11. An electric brake assembly according to claim 9 or 10, comprising an actuator mounting member (18) to which the actuator or actuators are mounted, the housing (34) of each actuator module (27) having at least one mounting flange (36) for abutting an axially outwardly facing mounting surface on the actuator mounting member (18) when in a first rotated position within an aperture (42) in the actuator mounting member (18), and the mounting flange (36) having a configuration for axial passage through the aperture (42) when in a second rotated position, thereby to facilitate easy disassembly of the actuator module (27) from the mounting member (18).

## Patentansprüche

1. Aktuator für eine elektrische Bremse, mit:
- einem Gehäuse (34) und
- einem linear bewegbaren Stößel (26),
**gekennzeichnet durch**
- eine Spindel (94) zum linearen Bewegen des Stößels (26),
- eine Mutter (90), die drehbar in dem Gehäuse (34) angebracht ist und derart in Wirkverbindung mit der Spindel (94) steht, dass das Drehen der Mutter (90) die lineare Bewegung der Spindel (94) bewirkt, um den Stößel (26) in Zwangsangriff mit einem Bremsscheibenstapel (12) zu drücken, und
- einen Elektromotor (80) zum Drehen der Mutter (90), und
- eine Hülse (98), die teleskopartig über der Mutter (90) angeordnet und mit der Spindel (94) bewegbar ist, um das Eindringen von Fremdmaterial in den Aktuator zu verhindern.

2. Aktuator nach Anspruch 1, bei welchem die Hülse (98) an einem Ende der Spindel (94) angebracht ist.

3. Aktuator nach Anspruch 1 oder 2, bei welchem eine dynamische Dichtung (100) zum Abdichten der Hülse (98) gegenüber dem Gehäuse (34) verwendet wird, um das Eindringen von Fremdmaterial in den Aktuator zu verhindern.

4. Aktuator nach Anspruch 3, bei welchem eine innere Dichtung (101) zur Abdichtung zwischen der Spindel (94) und der Mutter (90) vorgesehen ist.

5. Aktuator nach einem der vorhergehenden Ansprüche, bei welchem die Hülse (98) teleskopartig auf einem zylindrischen Endbereich der Mutter (90) mit Gleitsitz im Gehäuse (34) gleitet.

6. Aktuator nach einem der vorhergehenden Ansprüche, bei welchem die Hülse (98) eine ausreichende Länge aufweist, um die Länge der Spindel (94) zu bedecken, die im vollständig ausgefahrenen Zustand aus dem Gehäuse (34) ragt, wobei sie koextensiv mit der Mutter (90) bleibt.

7. Aktuator nach einem der vorhergehenden Ansprüche, bei welchem das äußere Ende der Hülse (98) geschlossen und derart konfiguriert ist, dass sie die Befestigung eines Isolierpads (71) am Ende des Stößels (26) ermöglicht, wobei das Pad (71) die Wärmeübertragung in das Aktuatormodul verhindert.

8. Aktuator nach einem der vorhergehenden Ansprüche, bei welchem die Spindel (94) eine Kugelspindel und die Mutter (90) eine Kugelmutter einer Kugelspindelanordnung (82) ist.

9. Elektrische Bremsenanordnung mit einem eine Mittelachse aufweisenden Bremsscheibenstapel (12) und mindestens einem Aktuator (27) nach einem der vorhergehenden Ansprüche zum Aufbringen von Bremsdruck auf den Bremsscheibenstapel.

10. Elektrische Bremsenanordnung nach Anspruch 9, bei welcher mehrere Aktuatoren (27) umfangsmäßig um die Mittelachse herum angeordnet sind.

11. Elektrische Bremsenanordnung nach Anspruch 9 oder 10, mit einem Aktuatorbefestigungselement (18), an welchem der Aktuator oder die Aktuatoren befestigt sind, wobei das Gehäuse (34) jedes Aktuatormoduls (27) mindestens einen Befestigungsflansch (36) aufweist, welcher in einer ersten Drehposition in einer Öffnung (42) in dem Aktuatorbefestigungselement (18) an einer axial nach außen gerichteten Befestigungsfläche des Aktuatorbefestigungselements (18) anliegt, und wobei der Befestigungsflansch (36) derart ausgebildet ist, dass er axial durch die Öffnung (42) treten kann, wenn er sich in einer Drehposition befindet, um so das einfache Demontieren des Aktuatormoduls (27) von dem Befestigungselement (18) zu erleichtern.

## Revendications

1. Actionneur pour frein électronique, comprenant:
- un boitier (34), et
- un piston (26) à mouvement linéaire,
**caractérisé par**
- une vis (94) pour le déplacement linéaire du piston (26),
- une écrou (90) montée rotative dans ledit boitier (34) et fonctionnellement en prise avec ladite vis (94) de sorte que la rotation de l'écrou (90) cause le déplacement linéaire de la vis (94) pour presser ledit piston (26) dans un engagement à force avec une pile de disques de frein (12), et
- un moteur électrique (80) pour tourner l'écrou (90), et
- une douille (98) prévue de manière télescopique sur l'écrou (90) et étant déplaçable avec ladite vis (94) pour empêcher l'intrusion de matière étrangère dans ledit actionneur.

2. Actionneur selon la revendication 1, dans lequel ladite douille (98) est attachée à une extrémité de ladite vis (94).

3. Actionneur selon la revendication 1 ou 2, dans lequel un joint dynamique (100) est utilisé pour étancher ladite douille (98) par rapport au boitier (34) pour empêcher l'intrusion de matière étrangère dans ledit actionneur.

4. Actionneur selon la revendication 3, dans lequel un joint interne (101) est prévu pour l'étanchéité entre ladite vis (94) et l'écrou (90).

5. Actionneur selon l'une quelconque des revendications précédentes, dans lequel ladite douille (98) glisse de manière télescopique sur une partie d'extrémité cylindrique de l'écrou (90) avec ajustement glissant dans ledit boitier (34).

6. Actionneur selon l'une quelconque des revendications précédentes, dans lequel ladite douille (98) a une longueur suffisante pour recouvrir la longueur de ladite vis (94) qui s'étend du boitier (34) si elle est complètement sortie, tout en restant coextensive à l'écrou (90).

7. Actionneur selon l'une quelconque des revendications précédentes, dans lequel l'extrémité extérieure de la douille (98) est fermée et configurée pour permettre l'attachement d'un coussin isolateur (71) à l'extrémité dudit piston (26), ledit coussin (71) empêche le transfert de chaleur dans le module actionneur.

8. Actionneur selon l'une quelconque des revendications précédentes, dans lequel ladite vis (94) est une vis à billes et l'écrou (90) est une écrou à billes d'un ensemble de vis à billes (82).

9. Ensemble de frein électrique comprenant une pile de disques de frein (12) ayant un axe central, et au moins un actionneur (27) selon l'une quelconque des revendications précédentes pour appliquer de la pression sur la pile de disques de frein.

10. Ensemble de frein électrique selon la revendication 9, dans lequel plusieurs actionneurs (27) sont disposés circonférentiellement autour de l'axe central.

11. Ensemble de frein électrique selon la revendication 9 ou 10, comprenant un élément de fixation d'actionneur (18) auquel est monté l'actionneur ou les actionneurs, ledit boitier (34) de chaque module actionneur (27) comprenant au moins une bride de fixation (36) pour contacter - dans une première position de rotation dans une ouverture (42) dudit élément de fixation d'actionneur (18) - une surface de montage dudit élément de fixation d'actionneur (18), tournée vers l'extérieur, et ladite bride de fixation (36) étant configurée pour passer axialement à travers ladite ouverture (42), quand elles est dans une deuxième position de rotation, pour ainsi faciliter une démontage aisée du module d'actionneur (27) dudit élément de fixation (18).
